# EUROPEAN PATENT APPLICATION

(11) **EP 2 695 918 A1**
(43) Date of publication of application: **12.02.2014**
(21) Application number: 12179506.6
(22) Date of filing: 07.08.2012
(51) Int. Cl.: C09D 7/12, B08B 17/02

(54) **Coating composition for the prevention and/or removal of limescale and/or soap scum**

(71) Applicant: 3M Innovative Properties Company, Saint Paul, MN 55133-3427 (US)
(72) Inventor: Strerath, Christiane, 41453 Neuss (DE); Jing, Naiyong, St. Paul, MN Minnesota 55133-3427 (US); Zhang, Yifan, St. Paul, MN Minnesota 55133-3427 (US); Legatt, Michelle L., St. Paul, MN Minnesota 55133-3427 (US); Wolk, Diane R., St. Paul, MN Minnesota 55133-3427 (US)
(74) Representative: Gabriel, Kiroubagaranne

(57) **Abstract**

This invention relates to coating compositions useful for the prevention and/or removal of limescale and/or soap scum. More specifically, the present invention is directed to a coating composition comprising acidified silica nanoparticles and a sulfonated polymer. The present invention is further directed to a method for the prevention and/or removal of limescale and/or soap scum from the surface of a substrate. The invention also relates to the use of such a coating composition for the prevention and/or removal of limescale and/or soap scum from the surface of a substrate.

## Description

### Technical Field of the Invention

This invention relates to coating compositions useful for the prevention and/or removal of limescale and/or soap scum. More specifically, the present invention is directed to a coating composition comprising acidified silica nanoparticles and a sulfonated polymer. The present invention is further directed to a method for the prevention and/or removal of limescale and/or soap scum from the surface of a substrate. The invention also relates to the use of such a coating composition for the prevention and/or removal of limescale and/or soap scum from the surface of a substrate.

### Background of the Invention

There have been many efforts to develop compositions that can be applied to substrates to provide a beneficial protective layer with desirable properties such as one or more of easy cleaning, stain prevention, long lasting performance, hard water stains deposit inhibition, and the like. Many compositions developed for such applications comprise materials, such as volatile organic solvents, which can present environmental issues and/or involve complex application processes. Further, problems relating to inadequate shelf-life continue to plague product developers of such compositions. Accordingly, for many consumer products a tradeoff of attributes is typically struck between the desired performance attributes, environmental friendliness of the materials, shelf-life, and ease of use by a relatively unskilled user.

For the specific purpose of providing hard surfaces with limescale and/or soap scum deposit inhibition, the prior art provides a variety of aqueous acidic hard surface cleaning compositions which are claimed to provide beneficial effects on the cleaning performance of limescale and soap scum. Examples of such aqueous acidic hard surface cleaning compositions are described e.g. in US-A1-2011/0061689, US-A1-2009/0260659, EP-A1-2 075 325, EP-A1-2 336 282 or US-A1-2007/0105737.

Aqueous coating compositions comprising silica nanoparticles and claimed to provide various beneficial effects, including soap scum removal benefits, to the treated substrates have been known in the art. Exemplary compositions are described e.g. in WO 2010/114698 A1, WO 2009/140482 A1, WO 2007/068939 A1, WO 2010/114700 A1, WO 2010/114698 A1.

Coating compositions comprising functionalized silica nanoparticles have also been shown to provide specific benefits such as e.g. easy cleaning or anti-fogging benefits, as disclosed in WO 2009/085680 A1, US-A1-2010/0092765 and WO 2011/002838 A1.

Without contesting the technical advantages associated with the compositions and coatings disclosed in the art, there is still a need for an improved method for the prevention and/or removal of limescale and/or soap scum from the surface of a substrate, in particular a siliceous substrate, and for coatings and coated articles having improved performance with regard to limescale and/or soap scum formation prevention and/or removal, durability, abrasion resistance and long-lasting protection benefit.

Other advantages of the coatings, coated articles and methods of the invention will be apparent from the following description.

### Summary of the Invention

According to one aspect, the present invention relates to a method for the prevention and/or removal of limescale and/or soap scum from the surface of a substrate, wherein the method comprises the steps of:
a) contacting the substrate with a coating composition comprising acidified silica nanoparticles, wherein the surface of the silica nanoparticles is functionalized with organic sulfonate functional groups; and
b) allowing said coating composition to dry so as to provide a silica nanoparticle coating onto the substrate.

According to another aspect, the present invention relates to a method for the prevention and/or removal of limescale and/or soap scum from the surface of a substrate, wherein the method comprises the steps of:
a) contacting the substrate with a coating composition comprising acidified silica nanoparticles and a sulfonated polymer; and
b) allowing the coating composition to dry so as to provide a silica nanoparticle coating onto the substrate.

According to still another aspect of the present invention, it is provided a coating composition suitable for the prevention and/or removal of limescale and/or soap scum from the surface of a substrate, comprising:
a) an aqueous continuous liquid phase;
b) acidified silica nanoparticles dispersed in said aqueous continuous liquid phase;
c) a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90; and
d) optionally, an hydrophilic polymer.

In another aspect, the present invention is directed to a coated article comprising a substrate and a coating composition as described above thereon.

According to still another aspect, the present invention is directed to the use of a coating composition as described above for the prevention and/or removal of limescale and/or soap scum from the surface of a substrate.

### Detailed description of the invention

According to one aspect, the present invention relates to a method for the prevention and/or removal of limescale and/or soap scum from the surface of a substrate, wherein the method comprises the steps of:
a) contacting the substrate with a coating composition comprising acidified silica nanoparticles, wherein the surface of the silica nanoparticles is functionalized with organic sulfonate functional groups; and
b) allowing said coating composition to dry so as to provide a (sintered) silica nanoparticle coating onto the substrate.

In the context of the present invention, the expression "the surface of the silica nanoparticles is functionalized with organic sulfonate functional groups" is meant to designate that the immediate vicinity of the silica nanoparticles surface is provided with organic sulfonate functional groups. Typically, the immediate vicinity of the silica nanoparticles surface may be provided with organic sulfonate functional groups through chemical mechanisms such as e.g. covalent bonds, intermolecular attractive interaction, or chemical adsorption between the organic sulfonate functional groups and the surface of the silica nanoparticles.

In the context of the present invention, it has been surprisingly discovered that the (sintered) silica nanoparticle coating layers as described above provide unexpected limescale and/or soap scum prevention and/or removal benefits when applied onto various substrates.

Without wishing to be bound by theory, it is believed that this is due to the surface functionalization of the silica nanoparticles with organic sulfonate functional groups, which imparts the treated surfaces with high repellency to soap scum and other organic contaminants, in conjunction with very low adhesion to hard water stains such as limescale. Still without wishing to be bound by theory, it is believed that the continuous and inorganic nature of the silica nanoparticle coating provided upon the coated substrate, and in particular the involvement of continuous sinter-bonded silica nanoparticles or continuous inorganic network of silica nanoparticles agglomerates participates in providing excellent repellency to soap scum and other mineral stains such as limescale. Without wishing to be bound by theory yet, it is further believed that the porosity characteristics of the (sintered) silica nanoparticle coating layers as described above, participates in capturing/scavenging limescale through weak interaction (or complex forming), the limescale being easily rinsed-away due to the highly hydrophilic nature of the surface of the silica nanoparticle coating layer.

In the context of the present invention, the expression "sintered silica nanoparticle coating" or "silica nanoparticle coating comprising sintered silica nanoparticles", is meant to designate a silica nanoparticle coating layer obtained from a coating composition comprising acidified silica nanoparticles, after said coating composition comprising acidified silica nanoparticles has been subjected to an appropriate drying step.

Without wishing to be bound by theory, it is believed that the silica nanoparticle coating comprising sintered silica nanoparticles, as described herein, comprises an aggregate or agglomeration of silica nanoparticles linked together so as to form a porous three-dimensional network. The term "porous" refers to the presence of voids between the silica nanoparticles created when the particles form a continuous coating.

### NANOPARTICLES

Suitable silica nanoparticles, solutions or dispersions, and methods of manufacturing thereof, for use in the method for the prevention and/or removal of limescale and/or soap scum from a surface according to the invention, are fully described in WO 2011/002838 A1, the content of which is incorporated herein by reference. Any (acidified) silica nanoparticles comprising coating composition (e.g. dispersion) commonly known in the art, may be used in the method according to the present invention.

Silica nanoparticles, that are surface modified or not, for use in the present invention comprise preferably nanometer-sized particles. The term "nanometer-sized" refers to particles that are characterized by an average particle size (i.e., the average of the largest dimension of the particles, or the average particle diameter for spherical particles) in the nanometer range, often no greater than 100 nanometers (nm), and preferably no greater than 60 nm (prior to surface modification, i.e., functionalization, if any). More preferably, the average particle size is no greater than 45 nm (prior to surface modification, if any), even more preferably no greater than 20 nm (prior to surface modification, if any), even more preferably no greater than 10 nm (prior to surface modification, if any), and even more preferably no greater than 5 nm (prior to surface modification, if any). Preferably, prior to surface modification, the average particle size of the silica nanoparticles is at least 1 nm, more preferably at least 2 nm, even more preferably at least 3 nm, and even more preferably at least 4 nm, and even more preferably at least 5 nm. A particularly preferred particle size is 4 nm to 6 nm.

Average particle size of the silica nanoparticles can be measured using transmission electron microscopy. In the practice of the present invention, particle size may be determined using any suitable technique. Preferably, particle size refers to the number average particle size and is measured using an instrument that uses transmission electron microscopy or scanning electron microscopy. Another method to measure particle size is dynamic light scattering that measures weight average particle size. One example of such an instrument found to be suitable is the N4 PLUS SUB-MICRON PARTICLE ANALYZER available from Beckman Coulter Inc. of Fullerton, CA.

It is also preferable that the silica nanoparticles be relatively uniform in size. Uniformly sized silica nanoparticles generally provide more reproducible results. Preferably, variability in the size of the nanoparticles is less than 25% of the mean particle size. Alternatively, the silica nanoparticles may have any particle size distribution consistent with the above described average particle size. For example, the particle size distribution may be monomodal, bimodal or polymodal.

Silica nanoparticles for use herein (prior to functionalization) are preferably water-dispersible to reduce, and preferably prevent, excessive agglomeration and precipitation of the particles in an aqueous environment. Silica nanoparticle aggregation can result in undesirable precipitation, gellation, or a dramatic increase in viscosity; however, small amounts of agglomeration can be tolerated when the silica nanoparticles are in an aqueous environment as long as the average size of the agglomerates (i.e., agglomerated particles) is no greater than 60 nm. Thus, the silica nanoparticles are preferably referred to herein as colloidal nanoparticles since they can be individual particles or small agglomerates thereof. The silica nanoparticles for use herein are dispersions of submicron size silica nanoparticles in an aqueous or in a water/organic solvent mixture. The average particle size may be determined using transmission electron microscopy.

The nanoparticles for use herein generally have a specific surface area greater than about 50 m²/gram, preferably greater than 200 m²/gram, and more preferably greater than 400 m²/gram. The particles preferably have narrow particle size distributions, that is, a polydispersity of 2.0 or less, preferably 1.5 or less. If desired, larger silica particles may be added, in amounts that do not deleteriously decrease the coatability of the composition on a selected substrate, and do not reduce the transmissivity and/or the hydrophilicity. Silica nanoparticles for use in the present invention may be porous or nonporous.

Suitable inorganic silica sols of porous and nonporous spherical particles in aqueous media are well known in the art and available commercially. Silica sols in water or water-alcohol solutions are available commercially under such trade names as LUDOX (manufactured by E.I. du Pont de Nemours and Co., Inc., Wilmington, Del., USA), NYACOL (available from Nyacol Co., Ashland, MA) or NALCO (manufactured by Ondea Nalco Chemical Co., Oak Brook, Ill. USA). One useful silica sol is NALCO 2326 available as a silica sol with mean particle size of 5 nanometers, pH 10.5, and solid content 15% by weight. Other commercially available silica nanoparticles for use herein include NALCO 1050, NALCO 1115, NALCO 1130, NALCO 2329, NALCO 8699 and NALCO TX11561, commercially available from NALCO Chemical Co.; REMASOL SP30, commercially available from Remet Corp. of Utica, NY; LUDOX SM, commercially available from E. I. du Pont de Nemours Co., Inc.; LI-518 and SI-5540, commercially available from Silco company. Other commercially available silica sols in water dispersion are available commercially under such trade names as Levasil or Bindzil (manufactured by Akzo Nobel). Some useful silica sols are Levasil 500/15, Levasil 50/50, Levasil 100/45, Levasil 200/30, Bindzil 15/500, Bindzil 15/750 and Bindzil 50/80. In one particular aspect, suitable silica nanoparticles for use of the present invention are preferably spherical particles.

Suitable silica nanoparticles for use in the present invention may be acicular. The term "acicular" refers to the general needle-like, elongated shape of the particles and may include other sting-like, rod-like, chain-like shapes, as well as filamentary shapes. Suitable acicular silica particles may be obtained as an aqueous suspension under the trade name SNOWTEX-UP or SNOWTEX-OUP by Nissan Chemical Industries (Tokyo, Japan). The SNOWTEX-UP mixture consists of 20-21 % (w/w) of acicular silica, less than 0.35% (w/w) of Na₂O, and water. The particles are about 9 to 15 nanometers in diameter and have lengths of 40 to 300 nanometers. The suspension has a viscosity of <100 mPas at 25°C, a pH of about 9 to 10.5, and a specific gravity of about 1.13 at 20°C. As for the SNOWTEX-OUP mixture, it consists of a 15-16 % (w/w) of acicular silica, with a pH of about 2 to 4.

Other suitable acicular silica particles may be obtained as an aqueous suspension under the trade name SNOWTEX-PS-S and SNOWTEX-PS-M by Nissan Chemical Industries, having a morphology of a string of pearls. The mixture consists of 20-21 % (w/w) of silica, less than 0.2% (w/w) of Na₂O, and water. The SNOWTEX-PS-M particles are about 18 to 25 nanometers in diameter and have lengths of 80 to 150 nanometers. The particle size is 80 to 150 by dynamic light scattering methods. The suspension has a viscosity of <100 mPas at 25°C, a pH of about 9 to 10.5, and a specific gravity of about 1.13 at 20°C. The SNOWTEX-PS-S has a particle diameter of 10-15 nm and a length of 80-120 nm.

In some aspects of the present invention, the silica nanoparticles for use herein are free of acicular silica nanoparticles.

Low-or non-aqueous silica sols (also called silica organosols) may also be used and are silica sol dispersions wherein the liquid phase is an organic solvent, or an aqueous organic solvent. In the practice of this invention, the silica sol is chosen so that its liquid phase is compatible with the emulsion, and is typically aqueous or an aqueous organic solvent.

The coating compositions for use herein preferably comprise at least 5 percent by weight of water; for example, the coating compositions may comprise at least 50, 60, 70, 80, or 90 percent by weight of water, or more. While the coating compositions is preferably essentially free of (i.e. that contains less than 0.1 percent by weight based on the total weight of the aqueous continuous liquid phase) organic solvents, especially volatile organic solvents, organic solvents may optionally be included in a minor amount if desired. If present, the organic solvents should preferably be water-soluble, or at least water-miscible in the amounts in which they are used, although this is not a requirement.

Examples of organic solvents include acetone and lower molecular weight ethers and/or alcohols such as methanol, ethanol, isopropanol, butanol, n-propanol, glycerin, ethylene glycol, triethylene glycol, propylene glycol, ethylene or propylene glycol monomethyl or monoethyl ether, diethylene or dipropylene glycol methyl or ethyl ether, ethylene or propylene glycol dimethyl ether, and triethylene glycol monomethyl or monoethyl ether.

The silica nanoparticle coating compositions for use herein may preferably be acidified to the desired pH level with an acid having preferably a pKa (H₂O) of less than 5, preferably less than 4, more preferably less than 3.5, even more preferably less than 3, even more preferably less than 2.5, even more preferably less than 2, even more preferably less than 1.5, even more preferably less than 1, most preferably less than 0. Useful acids for use herein include both organic and inorganic acids and may be exemplified by oxalic acid, citric acid, H₂SO₃, H₃PO₄, CF₃CO₂H, HCl, HBr, HI, HBrO₃, HNO₃, HClO₄, H₂SO₄, CF₃SO₃H, CF₃CO₂H, and CH₃SO₂OH. Most preferred acids include HCl, HNO₃, H₂SO₄, and H₃PO₄. In some embodiments, it is desirable to provide a mixture of an organic and inorganic acid. In some embodiments one may use a mixture of acids comprising those having a pKa of 3.5 or less (preferably less than 2.5, most preferably less than 1) and minor amounts of other acids having pKa's of more than 0.

The silica nanoparticle coating compositions for use herein preferably contain sufficient acid to provide a pH of less than 5, preferably less than 4, most preferably less than 3. To facilitate handling, the coating compositions preferably have a pH of at least 1, more preferably at least 2.

### FUNCTIONALIZED NANOPARTICLES

The method for the prevention and/or removal of limescale and/or soap scum from a surface according to one aspect of the present invention, comprises as a first step contacting the substrate with a coating composition comprising acidified silica nanoparticles, wherein the surface of the silica nanoparticles is functionalized with organic sulfonate functional groups.

A variety of methods are available for modifying/functionalizing the surface of (acidified) silica nanoparticles, depending on the functionality of the surface. Accordingly, the silica nanoparticle functionalization with organic sulfonate functional groups may be accomplished using any conventional techniques well known to those skilled in the art of silica nanoparticles. Examples of such conventional techniques are described e.g. in WO 2011/002838 A1. Typical methods include, but are not limited to, adding an organic sulfonate functional group containing-surface modifying agent to silica nanoparticles (e.g., in the form of a powder or a colloidal dispersion) and allowing the surface modifying agent to react/interact with the nanoparticles. The surface of the nanoparticles typically includes a group capable of reacting/interacting with a suitable organic sulfonate functional group containing-surface modifying agent, which in turns typically comprises a complementary surface-bonding group.

For example, the silanol groups on the surfaces of the silica nanoparticles may be reacted/interacted with at least one complementary surface-bonding group of the organic sulfonate functional group containing-surface modifying agent (also referred to as a functional compound) so as to form a functionalized silica nanoparticle. Exemplary conditions for reacting functional compounds with silica nanoparticles are described in the Examples Section.

In a preferred aspect of this first execution of the method for the prevention and/or removal of limescale and/or soap scum from a surface according to the present invention, the surface of the silica nanoparticles is functionalized with organic sulfonate functional groups through covalent bonds, preferably through covalent siloxane bonds, between the corresponding organic sulfonate functional group-containing surface modifying agent, which is preferably an organic sulfonate silane, and the complementary reactive groups present on the surface of the silica nanoparticles. Preferably, the silanol groups present on the surfaces of the silica nanoparticles are reacted with the complementary reactive groups of the organic sulfonate functional group-containing surface modifying agent, which is preferably an organic sulfonate silane,) so as to form a siloxane bond. However, the present invention is not that limited.

In an alternative aspect of this first execution of the method for the prevention and/or removal of limescale and/or soap scum from a surface according to the present invention, the surface of the silica nanoparticles is functionalized with organic sulfonate functional groups by chemical adsorption. In the context of the present invention, the expression "chemical adsorption" is meant to designate the chemical adsorption of the organic sulfonate functional group-containing surface modifying agent, which is preferably an organic sulfonate silane, onto the (sintered) silica nanoparticle coating resulting from the drying of the corresponding coating composition comprising acidified silica nanoparticles.

Other suitable alternative ways of functionalizing the surface of the silica nanoparticles with organic sulfonate functional groups include, but are not limited to, those involving chemical mechanisms such as e.g. or intermolecular attractive interaction between the organic sulfonate functional group-containing surface modifying agent, which is preferably an organic sulfonate silane, and the surface of the silica nanoparticles.

According to one preferred aspect this first execution of the method for the prevention and/or removal of limescale and/or soap scum from a surface according to the invention, the surface of the acidified silica nanoparticles is functionalized with organic sulfonate functional groups by (chemically) reacting the acidified silica nanoparticles with an organic sulfonate silane, preferably an organic sulfonate alkoxy silane.

According to another preferred aspect of this first execution of the method for the prevention and/or removal of limescale and/or soap scum from a surface according to the present invention, the surface of the silica nanoparticles is functionalized with organic sulfonate functional groups by addition of organic sulfonate functional group-containing surface modifying agent ,which is preferably an organic sulfonate silane, to the coating composition comprising acidified silica nanoparticles.

### ORGANIC SULFONATE SILANES

Any organic sulfonate functional group-containing surface modifying agents commonly known in the art may be used in the context of the present invention. As will be recognized by those skilled in the art of functionalized silica nanoparticles in the light of the present description, suitable organic sulfonate functional group-containing surface modifying agents for use herein include, but are not limited to, those described e.g. in WO 2011/084661 A1 or in WO 2011/002838 A1.

Suitable organic sulfonate functional group-containing surface modifying agents for use herein are preferably organic sulfonate silanes, more preferably organic sulfonate alkoxy silanes.

According to a particular aspect, the present invention relates to a method for the prevention and/or removal of limescale and/or soap scum from the surface of a substrate, wherein the method comprises the steps of:
a) providing a coating composition comprising:
   i. an aqueous continuous liquid phase;
   ii. acidified silica nanoparticles dispersed in the aqueous continuous liquid phase;
   iii. an organic sulfonate silane, which is preferably an organic sulfonate alkoxy silane;
   iv. optionally, an hydrophilic polymer; and
b) optionally, allowing the acidified silica nanoparticles to (chemically) react with the organic sulfonate silane;
c) contacting the substrate with the coating composition;
d) allowing the coating composition to dry so as to provide a (sintered) silica nanoparticle coating onto the substrate.

Preferably, the coating composition for use in this execution of the method for the prevention and/or removal of limescale and/or soap scum from the surface of a substrate, comprises:
a) an aqueous continuous liquid phase;
b) silica nanoparticles dispersed in the aqueous continuous liquid phase;
c) an organic sulfonate silane, preferably organic sulfonate alkoxy silane;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, an hydrophilic polymer.

In a more preferred aspect, the coating composition for use in this execution of the method for the prevention and/or removal of limescale and/or soap scum from the surface of a substrate, comprises:
a) from 0.5 to 99 wt.% of water;
b) from 0.1 to 20 wt.%, preferably from 1 to 15 wt.%, more preferably from 2 to 10 wt.%, even more preferably from 3 to 8 wt.%, still more preferably from 4 to 6 wt.% of silica nanoparticles;
c) from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an organic sulfonate silane;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, from 0.1 to 20 wt.%, preferably from 0.1 to 15 wt.%, more preferably from 0.15 to 10 wt.%, even more preferably from 0.2 to 5 wt.%, still more preferably from 0.25 to 1 wt.% of an hydrophilic polymer.

In the context of the present invention, the terms "organic sulfonate silane" and "organic sulfonate alkoxy silane" are meant to refer respectively to a silane and an alkoxy silane comprising an organic sulfonate functional group.

Examples of organic sulfonate silanes for use in the present invention include those disclosed in U.S. Patent Nos. 4,152,165 and 4,338,377, the contents of which are incorporated herein by reference.

In some aspects, the organic sulfonate silanes for use in the present invention have the following Formula (I):

[(MO)(Qₙ)Si(XCH₂SO₃⁻)₃₋ₙ]Y_{2/nr}^{+r} (I)

wherein:
each Q is independently selected from the group consisting of hydroxyl, alkyl groups containing preferably from 1 to 4 carbon atoms and alkoxy groups containing preferably from 1 to 4 carbon atoms;
M is selected from the group consisting of hydrogen, alkali metals, and organic cations of strong organic bases having an average molecular weight of less than 150 and a pKa of greater than 11;
X is an organic linking group;
Y is selected from the group consisting of hydrogen, alkaline earth metals (e.g., magnesium, calcium, etc.), organic cations of protonated weak bases having an average molecular weight of less than 200 and a pKa of less than 11 (e.g., 4-aminopyridine, 2-methoxyethylamine, benzylamine, 2,4-dimethylimidazole, 3-[2-ethoxy(2-ethoxyethoxy)]propylamine), alkali metals, and organic cations of strong organic bases having an average molecular weight of less than 150 and a pKa of greater than 11 (e.g., ⁺N(CH₃)₄, ⁺N(CH₂CH₃)₄), provided that M is hydrogen when Y is selected from the group consisting of hydrogen, alkaline earth metals and organic cations of said protonated weak bases;
r is equal to the valence of Y; and
n is 1 or 2.

Preferably, the organic sulfonate silanes according to Formula (I) are alkoxysilane compounds, wherein Q is an alkoxy group containing preferably from 1 to 4 carbon atoms. More preferably, Q is selected from the group consisting of methoxy and ethoxy groups.

The weight percentage of oxygen in these compounds of Formula (I) is at least 30%, and preferably at least 40%. Most preferably it is in the range of 45% to 55%. The weight percentage of silicon in these compounds is no greater than 15%. Each of these percentages is based on the weight of the compound in the water-free acid form.

The organic linking group X of Formula (I) is preferably selected from alkylene groups, cycloalkylene groups, alkyl-substituted cycloalkylene groups, hydroxy-substituted alkylene groups, hydroxy-substituted mono-oxa alkylene groups, divalent hydrocarbon groups having mono-oxa backbone substitution, divalent hydrocarbon groups having mono-thia backbone substitution, divalent hydrocarbon groups having monooxo-thia backbone substitution, divalent hydrocarbon groups having dioxo-thia backbone substitution, arylene groups, arylalkylene groups, alkylarylene groups and substituted alkylarylene groups. Most preferably, X is selected from alkylene groups, hydroxy-substituted alkylene groups and hydroxy-substituted mono-oxa alkylene groups.

Suitable examples of preferred organic sulfonate silanes for use herein and having Formula (I) include, for example, the following:
(HO)₃Si-CH₂CH₂CH₂-O-CH₂-CH(OH)-CH₂SO₃⁻H⁺;
(HO)(MeO)₂Si-CH₂CH₂CH₂-O-CH₂-CH(OH)-CH₂SO3⁻H⁺;
(HO)(EtO)₂Si-CH₂CH₂CH₂-O-CH₂-CH(OH)-CH₂SO₃⁻H⁺;
(NaO)(HO)₂Si-CH₂CH₂CH₂-O-CH₂-CH(OH)-CH₂SO₃⁻Na⁺;
(NaO)(MeO)₂Si-CH₂CH₂CH₂-O-CH₂-CH(OH)-CH₂SO₃⁻Na⁺;
(NaO)(EtO)₂Si-CH₂CH₂CH₂-O-CH₂-CH(OH)-CH₂SO₃⁻Na⁺;
(HO)₃Si-CH₂CH(OH)-CH₂SO₃⁻H⁺;
(HO)₃Si-CH₂CH₂CH₂SO₃⁻H⁺;
(HO)₃Si-C₆H₄-CH₂CH₂SO₃⁻H⁺;
(HO)₂Si-[CH₂CH₂SO₃⁻H⁺]₂;
(HO)-Si(CH₃)₂-CH₂CH₂SO₃⁻H⁺;
and
(HO)₃Si-CH₂CH₂SO₃⁻K⁺-

More preferred examples of preferred organic sulfonate silanes for use herein and having Formula (I) include:
(HO)₃Si-CH₂CH₂CH₂-O-CH₂-CH(OH)-CH₂SO₃⁻H⁺;
(HO)(MeO)₂Si-CH₂CH₂CH₂-O-CH₂-CH(OH)-CH₂SO₃⁻H⁺;
(HO)(EtO)₂Si-CH₂CH₂CH₂-O-CH₂-CH(OH)-CH₂SO₃⁻H⁺;
(NaO)(HO)₂Si-CH₂CH₂CH₂-O-CH₂-CH(OH)-CH₂SO₃⁻Na⁺;
(NaO)(MeO)₂Si-CH₂CH₂CH₂-O-CH₂-CH(OH)-CH₂SO₃⁻Na⁺;
(NaO)(EtO)₂Si-CH₂CH₂CH₂-0-CH₂-CH(OH)-CH₂SO₃⁻Na⁺;

In some other aspects, the organic sulfonate silanes for use in the present invention have the following Formula (II):

(R¹O)ₚ-Si(R²)_{q}-W-N⁺(R³)(R⁴)-(CH₂)ₘ-SO₃⁻ (II)

wherein:
each R¹ is independently a hydrogen, methyl group, or ethyl group;
each R² is independently a methyl group or an ethyl group;
each R³ and R⁴ is independently a saturated or unsaturated, straight chain, branched, or cyclic organic group, which may be joined together, optionally with atoms of the group W, to form a ring;
W is an organic linking group;
p is an integer of 1 to 3;
m is an integer of 1 to 4;
q is 0 or 1; and
p+q=3.

The organic linking group W of Formula (II) is preferably selected from saturated or unsaturated, straight chain, branched, or cyclic organic groups. The linking group W is preferably an alkylene group, which may include carbonyl groups, urethane groups, urea groups, heteroatoms such as oxygen, nitrogen, and sulfur, and combinations thereof. Examples of suitable linking groups W include alkylene groups, cycloalkylene groups, alkyl-substituted cycloalkylene groups, hydroxy-substituted alkylene groups, hydroxy-substituted mono-oxa alkylene groups, divalent hydrocarbon groups having mono-oxa backbone substitution, divalent hydrocarbon groups having mono-thia backbone substitution, divalent hydrocarbon groups having monooxo-thia backbone substitution, divalent hydrocarbon groups having dioxo-thia backbone substitution, arylene groups, arylalkylene groups, alkylarylene groups and substituted alkylarylene groups.

Suitable examples of organic sulfonate silanes of Formula (II) are described e.g. in U.S. Patent No. 5,936,703 (Miyazaki et al.) or in International Publication Nos. WO 2007/146680 and WO 2009/119690.

In some other aspects, the organic sulfonate silanes for use in the present invention have the following Formula (III):

(R¹O)ₚ-Si(R²)_{q}-CH₂CH₂CH₂-N⁺(CH₃)₂-(CH₂)ₘ-SO₃⁻ (III)

wherein:
each R¹ is independently a hydrogen, methyl group, or ethyl group;
each R² is independently a methyl group or an ethyl group;
p is an integer of 1 to 3;
m is an integer of 1 to 4;
q is 0 or 1; and
p+q=3.

Suitable examples of preferred organic sulfonate silanes for use herein and having Formula (III) are described e.g. in U.S. Patent No. 5,936,703 (Miyazaki et al.), and include, for example:
(CH₃O)₃Si-CH₂CH₂CH₂-N⁺(CH₃)₂-CH₂CH₂CH₂-SO₃⁻; and
(CH₃CH₂O)₂Si(CH₃)-CH₂CH₂CH₂-N⁺(CH₃)₂-CH₂CH₂CH₂-SO₃⁻.

Other examples of organic sulfonate silanes for use herein, include the following: 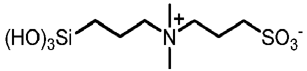 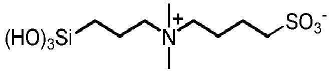 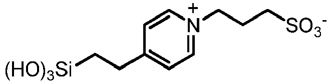 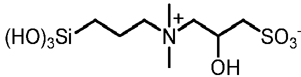 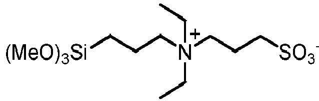 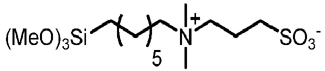 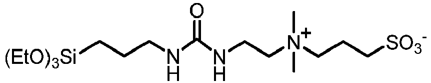 and

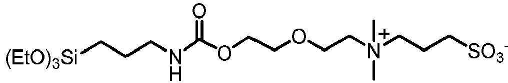

Preferred examples of suitable organic sulfonate silanes for use in preparing coating compositions and coatings of the present disclosure are described in the Experimental Section.

Methods for modifying/functionalizing the surface of acidified silica nanoparticles, with organic sulfonate functional groups are well within the practice of those skilled in the art of silica nanoparticles. Typical exemplary methods include the steps of adding an organic sulfonate silane to an aqueous dispersion of acidified silica nanoparticles and allowing the organic sulfonate silane to react/interact with the nanoparticles, optionally under heating.

In a particular aspect of this execution of the method for the prevention and/or removal of limescale and/or soap scum from the surface of a substrate according to the present invention, the ratio of organic sulfonate silanes to silica nanoparticles is preferably below 30:70, more preferably below 20:80, even more preferably preferably below 10:90. In some aspects of the method for the prevention and/or removal of limescale and/or soap scum from a surface according to the present invention, the ratio of organic sulfonate silanes to silica nanoparticles is preferably comprised between 20:80 and 2:98, more preferably between 15:85 and 3:97, even more preferably between 10:90 and 4:96. In some other aspects, the ratio of organic sulfonate silanes to silica nanoparticles is in particular of about 5:95.

In the particular aspect of this execution of the method according to the present invention, where an hydrophilic polymer is comprised in the coating composition, the ratio of hydrophilic polymer to silica nanoparticles is preferably below 30:70, more preferably below 20:80, even more preferably preferably below 15:85. In some aspects of the method for the prevention and/or removal of limescale and/or soap scum from a surface according to the present invention, the ratio of hydrophilic polymer to silica nanoparticles is preferably comprised between 20:80 and 2:98, more preferably between 15:85 and 3:97, even more preferably between 13:87 and 5:95. In some other aspects, the ratio of hydrophilic polymer to silica nanoparticles is in particular of about 10:90.

In a particular aspect of this execution of the method for the prevention and/or removal of limescale and/or soap scum from a surface according to the present invention, the coating comprises typically from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an organic sulfonate silane, by weight of the overall coating composition.

In the particular aspect of this execution of the method according to the present invention, where an hydrophilic polymer is comprised in the coating composition, the coating comprises typically from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an hydrophilic polymer, by weight of the overall coating composition.

The silica nanoparticle coating compositions for use in this execution of the method for the prevention and/or removal of limescale and/or soap scum from a surface according to the present invention, may advantageously comprise an hydrophilic polymer.

According to another aspect of the present invention, it is provided a method for the prevention and/or removal of limescale and/or soap scum from the surface of a substrate, wherein the method comprises the steps of:
a) contacting the substrate with a coating composition comprising acidified silica nanoparticles and a sulfonated polymer; and
b) allowing the coating composition to dry so as to provide a (sintered) silica nanoparticle coating onto the substrate.

### SULFONATED POLYMERS

Any sulfonated polymers commonly known in the art may be used in the context of the present invention. The term "sulfonated polymer" is herein meant to designate any polymeric material comprising a sulfonate functional group. Preferably, the polymeric material comprises an organic sulfonate functional group.

Suitable sulfonated polymers for use herein will be recognized by those skilled in the art in the light of the present description. Suitable sulfonated polymers for use herein are commercially available or may alternatively be manufactured using any conventional techniques well known to those skilled in the art. Examples of such conventional techniques include, but are not limited to, sulfonation of polymers or co-polymerization techniques.

Suitable sulfonated polymers for use herein are preferably selected from the group consisting of functional sulfonated polymers, reactive functional sulfonated polymers, polar sulfonated polymers, and any combinations of mixtures thereof. More preferably, the sulfonated polymers are selected from the group consisting of (meth)acrylic acid-based sulfonate copolymers, carboxylic acid-based sulfonate copolymers, and any combinations or mixtures thereof. Even more preferably the sulfonated polymers are selected from the group consisting of (meth)acrylate/sulfonate copolymers, carboxylate/sulfonate copolymers, and any combinations or mixtures thereof.

Exemplary acrylate/sulfonate copolymers include, but are not limited to, copolymers of acrylic acid and 2-methyl-2[(1-oxo-2-propenyl)amino]-1-propanesulfonic acid sodium salt, also known as polyacrylic acid-co-2-methyl-2[(1-oxo-2-propenyl)amino]-1-propanesulfonic acid sodium salt (AA/AAPS); copolymers of methacrylic acid and 2-methyl-2[(1-oxo-2-propenyl)amino]-1-propanesulfonic acid sodium salt; copolymers of alkyl acrylic acid and 2-methyl-2[(1-oxo-2-propenyl)amino]-1-propanesulfonic acid sodium salt; copolymers of alkyl methacrylic acid and 2-methyl-2[(1-oxo-2-propenyl)amino]-1-propanesulfonic acid sodium salt; copolymers of acrylic acid and 2-acrylamido-2-methylpropane sulfonate (AA/AMPS); copolymers of methacrylic acid and 2-acrylamido-2-methylpropane sulfonate copolymer (MA/AMPS); copolymers of alkyl acrylic acid and 2-acrylamido-2-methylpropane sulfonate; copolymers of alkyl methacrylic acid and 2-acrylamido-2-methylpropane sulfonate; copolymers of methyl methacrylic acid and 2-acrylamido-2-methylpropane sulfonate copolymer (MMA/AMPS); copolymers of 2-hydropropyl methacrylic acid and 2-acrylamido-2-methylpropane sulfonate copolymer (HPMA/AMPS). Preferably, the sulfonated polymer for use herein is polyacrylic acid-co-2-methyl-2[(1-oxo-2-propenyl)amino]-1-propanesulfonic acid sodium salt (AA/AAPS), which is e.g. commercially available under such trade name as Aquatreat AR-546 (available from Alco Chemical Company).

Exemplary carboxylate/sulfonate copolymers include, but are not limited to, those commercially available under such trade name as Acumer 2000 and Acumer 2100 (available from Dow Chemical Company). Other commercially available carboxylate/sulfonate copolymers for use herein include Maxinol C4200 (available from Aquapharm Chemicals Pvt. Limited) and those commercially available under such trade name as Vintreat (available from Vinati Organics Ltd.).

In the context of the present invention, it has been surprisingly discovered that the (sintered) silica nanoparticle coating layers as described above provide unexpected limescale and/or soap scum prevention and/or removal benefits when applied onto various substrates. Without wishing to be bound by theory, it is believed that this is due to the presence of sulfonated polymers, which imparts the treated surfaces with high repellency to soap scum and other organic contaminants, in conjunction with very low adhesion to hard water stains such as limescale. Still without wishing to be bound by theory, it is believed that the continuous and inorganic nature of the silica nanoparticle coating provided upon the coated substrate, and in particular the involvement of continuous sinter-bonded silica nanoparticles or continuous inorganic network of silica nanoparticles agglomerates participates in providing excellent repellency to soap scum and other mineral stains such as limescale.

The silica nanoparticle coating compositions for use in this execution of the method for the prevention and/or removal of limescale and/or soap scum from the surface of a substrate according to the present invention, may advantageously further comprise an hydrophilic polymer.

According to a particular aspect, the present invention relates to a method for the prevention and/or removal of limescale and/or soap scum from the surface of a substrate, wherein the method comprises the steps of:
a) contacting the substrate with a coating composition comprising:
   i. an aqueous continuous liquid phase;
   ii. acidified silica nanoparticles dispersed in the aqueous continuous liquid phase;
   iii. a sulfonated polymer, preferably selected from the group of (meth)acrylic acid-based sulfonate copolymers and carboxylic acid-based sulfonate copolymers;
   iv. optionally, an hydrophilic polymer; and
b) allowing the coating composition to dry so as to provide a (sintered) silica nanoparticle coating onto the substrate.

Preferably, the coating composition for use in this execution of the method for the prevention and/or removal of limescale and/or soap scum from the surface of a substrate, comprises:
a) an aqueous continuous liquid phase;
b) silica nanoparticles dispersed in the aqueous continuous liquid phase;
c) a sulfonate polymer, preferably selected from the group of (meth)acrylic acid-based sulfonate copolymers and carboxylic acid-based sulfonate copolymers;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, an hydrophilic polymer.

In a more preferred aspect, the coating composition for use in this execution of the method for the prevention and/or removal of limescale and/or soap scum from the surface of a substrate, comprises:
a) from 0.5 to 99 wt.% of water;
b) from 0.1 to 20 wt.%, preferably from 1 to 15 wt.%, more preferably from 2 to 10 wt.%, even more preferably from 3 to 8 wt.%, still more preferably from 4 to 6 wt.% of silica nanoparticles;
c) from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of a sulfonated polymer, preferably selected from the group of (meth)acrylic acid-based sulfonated copolymers and carboxylic acid-based sulfonated copolymers;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an hydrophilic polymer.

In a particular aspect of this execution of the method for the prevention and/or removal of limescale and/or soap scum from the surface of a substrate according to the present invention, the ratio of sulfonated polymer to silica nanoparticles is preferably below 30:70, more preferably below 20:80, even more preferably preferably below 10:90. In some aspects of the method for the prevention and/or removal of limescale and/or soap scum from a surface according to the present invention, the ratio of organic sulfonate silanes to silica nanoparticles is preferably comprised between 20:80 and 2:98, more preferably between 15:85 and 3:97, even more preferably between 10:90 and 4:96. In some other aspects, the ratio of organic sulfonate silanes to silica nanoparticles is in particular of about 5:95.

In the particular aspect of this execution of the method according to the present invention, where an hydrophilic polymer is comprised in the coating composition, the ratio of hydrophilic polymer to silica nanoparticles is preferably below 30:70, more preferably below 20:80, even more preferably preferably below 10:90. In some aspects of the method for the prevention and/or removal of limescale and/or soap scum from a surface according to the present invention, the ratio of hydrophilic polymer to silica nanoparticles is preferably comprised between 20:80 and 2:98, more preferably between 15:85 and 3:97, even more preferably between 15:85 and 3:97, even more preferably between 10:90 and 4:96. In some other aspects, the ratio of hydrophilic polymer to silica nanoparticles is in particular of about 5:95.

In a particular aspect of this execution of the method for the prevention and/or removal of limescale and/or soap scum from a surface according to the present invention, the coating comprises typically from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of a sulfonated polymer, by weight of the overall coating composition.

In the particular aspect of this execution of the method according to the present invention, where an hydrophilic polymer is comprised in the coating composition, the coating comprises typically from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an hydrophilic polymer, by weight of the overall coating composition.

According to another aspect of the present invention, it is provided a method of treating the surface of a substrate, wherein the method comprises the steps of:
a) contacting the substrate with a coating composition comprising acidified silica nanoparticles and a sulfonated polymer; and
b) allowing the coating composition to dry so as to provide a (sintered) silica nanoparticle coating onto the substrate.

According to still another aspect of the present invention, it is provided a method of imparting hydrophilicity to the surface of a substrate, wherein the method comprises the steps of :
a) contacting the substrate with a coating composition comprising acidified silica nanoparticles and a sulfonated polymer; and
b) allowing the coating composition to dry so as to provide a (sintered) silica nanoparticle coating onto the substrate.

According to yet another aspect of the present invention, it is provided a method of applying a silica nanoparticle coating onto the surface of a substrate, wherein the method comprises the steps of:
a) contacting the substrate with a coating composition comprising acidified silica nanoparticles and a sulfonated polymer; and
b) allowing the coating composition to dry so as to provide a (sintered) silica nanoparticle coating onto the substrate.

### COATING COMPOSITIONS

According to another aspect of the present invention, it is provided a coating composition suitable for the prevention and/or removal of limescale and/or soap scum from the surface of a substrate, comprising:
a) an aqueous continuous liquid phase;
b) acidified silica nanoparticles dispersed in the aqueous continuous liquid phase;
c) a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90; and
d) optionally, an hydrophilic polymer.

In a preferred aspect, the coating composition suitable for the prevention and/or removal of limescale and/or soap scum from the surface of a substrate, comprises:
a) an aqueous continuous liquid phase;
b) silica nanoparticles dispersed in the aqueous continuous liquid phase;
c) a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, an hydrophilic polymer.

In a more preferred aspect, the coating composition suitable for the prevention and/or removal of limescale and/or soap scum from the surface of a substrate, comprises:
a) from 0.5 to 99 wt.% of water;
b) from 0.1 to 20 wt.%, preferably from 1 to 15 wt.%, more preferably from 2 to 10 wt.%, even more preferably from 3 to 8 wt.%, still more preferably from 4 to 6wt.% of silica nanoparticles;
c) from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an hydrophilic polyvinyl alcohol polymer.

In a particular aspect of the coating composition suitable for the prevention and/or removal of limescale and/or soap scum from the surface of a substrate according to the present invention, the ratio of sulfonated polymer to silica nanoparticles is preferably below 30:70, more preferably below 20:80, even more preferably preferably below 10:90. In some aspects of the method for the prevention and/or removal of limescale and/or soap scum from a surface according to the present invention, the ratio of organic sulfonate silanes to silica nanoparticles is preferably comprised between 20:80 and 2:98, more preferably between 15:85 and 3:97, even more preferably between 10:90 and 4:96. In some other aspects, the ratio of organic sulfonate silanes to silica nanoparticles is in particular of about 5:95.

In the particular aspect of the coating composition suitable for the prevention and/or removal of limescale and/or soap scum from the surface of a substrate according to the present invention, where an hydrophilic polymer is comprised in the coating composition, the ratio of hydrophilic polymer to silica nanoparticles is preferably below 30:70, more preferably below 20:80, even more preferably preferably below 10:90. In some aspects of the method for the prevention and/or removal of limescale and/or soap scum from a surface according to the present invention, the ratio of hydrophilic polymer to silica nanoparticles is preferably comprised between 20:80 and 2:98, more preferably between 15:85 and 3:97, even more preferably between 15:85 and 3:97, even more preferably between 10:90 and 4:96. In some other aspects, the ratio of hydrophilic polymer to silica nanoparticles is in particular of about 5:95.

In a particular aspect of the coating composition suitable for the prevention and/or removal of limescale and/or soap scum from a surface according to the present invention, the coating comprises typically from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of a sulfonated polymer, by weight of the overall coating composition.

In the particular aspect of this execution of the coating composition according to the present invention, where an hydrophilic polymer is comprised in the coating composition, the coating comprises typically from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an hydrophilic polymer, by weight of the overall coating composition.

### HYDROPHILIC POLYMERS

Hydrophilic polymers for use in the methods and coating compositions of the present invention may be any hydrophilic polymers commonly known in the art. The term "hydrophilic polymer" is herein meant to designate any polymeric material that has a strong affinity for water. Preferably, the polymeric material comprises polar or charged functional groups, rendering it soluble in water.

Suitable hydrophilic polymers for use herein will be recognized by those skilled in the art in the light of the present description. Suitable hydrophilic polymers for use herein are commercially available or may alternatively be manufactured using any conventional techniques well known to those skilled in the art. Suitable hydrophilic polymers for use herein are preferably selected from the group consisting of acrylic-based polymers and copolymers, amine-based polymers and copolymers, ether-based polymers and copolymers, styrene-based polymers and copolymers, vinyl acid-based polymers and copolymers, vinyl alcohol-based polymers and copolymers, and any combinations of mixtures thereof. More preferably, the hydrophilic polymers for use herein are selected from the group consisting of ether-based polymers and copolymers, vinyl alcohol-based polymers and copolymers, and any combinations or mixtures thereof. Even more preferably the hydrophilic polymers are selected from the group consisting of polyvinyl alcohol polymers, polyethylene glycols polymers, and any combinations or mixtures thereof.

In the context of the present invention, it has been discovered that the addition of hydrophilic polymers in the coating compositions for use herein improves in particular the limescale and/or soap scum prevention and/or removal performance of the corresponding compositions.

According to still another aspect, the present invention is directed to a coated article comprising a substrate and a coating composition as described above thereon.

### SUBSTRATES

The (sintered) silica nanoparticle coating layers as described above provide excellent limescale and/or soap scum prevention and/or removal benefits when applied onto various substrates, in particular to substrates comprising a hard surface selected from the group consisting of siliceous substrates, glass surfaces, plastic surfaces, thermoset polymeric surfaces, thermoplastic polymeric surfaces, organic polymeric substrates, ceramic surfaces, cement surfaces, stone surfaces, painted or clearcoated surfaces, metal surfaces, and any combinations thereof.

In one preferred aspect, the substrate is translucent or more preferably transparent, and is even more preferably selected from the group consisting of glass surfaces, thermoplastic polymeric surfaces, organic polymeric substrates, ceramic surfaces, and any combinations thereof.

In another preferred aspect, the substrate is selected from the group consisting of shower surrounds, shower cabins, bathtubs, toilets, sinks, faucets, windows, mirrors, and any combinations thereof.

Suitable substrates, silica nanoparticles or sulfonated polymers for use in the coating compositions according to one aspect of the present invention, may be identical or different from those used in the methods according to other aspects of the present invention as described above.

According to a preferred execution, the coated article has a static water contact angle of less than 25°, preferably less than 20°, more preferably less than 15°, even more preferably less than 12°, still more preferably less than 10°, when measured according to the durability test method described in the experimental section.

According to another preferred execution, the coated article has a static water contact angle of less than 25°, preferably less than 20°, more preferably less than 15°, even more preferably less than 10°, when measured according to the durability test method described in the experimental section, after the coated article has been subjected to 1000 wet abrasion cycles performed according to the wet abrasion procedure described in the experimental section.

### COATING PROCESS

The compositions are preferably coated on the article using conventional coating techniques, such as brush, bar, roll, wipe, curtain, rotogravure, spray, or dip coating techniques. For ease and simplicity, a preferred method is to wipe the coating formulation on using a suitable woven or nonwoven cloth, sponge, or foam. Such application materials are preferably acid-resistant and may be hydrophilic or hydrophobic in nature, preferably hydrophilic. Another method to control final thickness and resultant appearance is to apply the coating using any suitable method and, after allowing a portion of the solvent to evaporate, to rinse off excess composition with a stream of water, while the substrate is still fully or substantially wetted with the composition.

Compositions according to the present disclosure are preferably applied to a substrate in a uniform average thickness varying from 50 to 700 nanometers (nm), and more preferably less than 500 nm, in order to avoid visible interference color variations in the coating and/or hazy appearance, although other thicknesses may also be used.

The optimal average dry coating thickness is dependent upon the particular composition that is coated, but in general the average dry thickness of the composition is between 5 and 500 nm, preferably 50 and 400 nm (for example, as estimated from atomic force microscopy and/or surface profilometry), although other thicknesses may be used. Above this range, the dry coating thickness variations typically cause optical interference effects, leading to visible iridescence (rainbow effect) of the dried coating which is particularly apparent on darker substrates. Below this range the dry coating thickness may be inadequate to confer sufficient durability for most coatings exposed to environmental wear.

After coating the surface of the substrate, the resultant article may be dried at ambient temperatures without the need for heat, radiation or other curing method. Higher temperature may increase the speed of the drying process, although such temperatures may not be practical or convenient and care must be exercised to avoid damage to the substrate.

Preferably, compositions according to the present disclosure are stable when stored in the liquid form, for example, they do not gel, opacify, form precipitated or agglomerated particulates, or otherwise deteriorate significantly.

The methods and coating compositions according to the present invention are suitable to provide any benefit selected from the group consisting of improved limescale and/or soap scum prevention and/or removal performance; durability; long-lasting limescale and/or soap scum prevention and/or removal benefit; next-time cleaning benefit; easy rinsing benefit; easy-to-clean benefit; stay clean benefit; easy limescale and/or soap scum removal benefit; water resistance durability benefit; durability in aqueous environment benefit; improved mechanical durability (wet abrasion resistance) benefit; and any combinations thereof.

In another aspect, the present invention relates to the use of a coating composition as described above for the prevention and/or removal of limescale and/or soap scum from the surface of a substrate. The surface for use herein is preferably selected from hard surfaces typically located in a bathroom, in a toilet or in a kitchen, more preferably in a bathroom.

Item 1 is a method for the prevention and/or removal of limescale and/or soap scum from the surface of a substrate, wherein the method comprises the steps of:
a) contacting the substrate with a coating composition comprising acidified silica nanoparticles, wherein the surface of the acidified silica nanoparticles is functionalized with organic sulfonate functional groups; and
b) allowing the coating composition to dry so as to provide a (sintered) silica nanoparticle coating onto the substrate.

Item 2 is the method of item 1, wherein the surface of the silica nanoparticles is functionalized with organic sulfonate functional groups through covalent bonds, preferably through covalent siloxane bonds, between the organic sulfonate functional groups and the surface of said silica nanoparticles.

Item 3 is the method of item 1, wherein the surface of the acidified silica nanoparticles is functionalized with organic sulfonate functional groups by chemical adsorption.

Item 4 is the method according to any of the preceding items, wherein the surface of the acidified silica nanoparticles is functionalized with organic sulfonate functional groups by (chemically) reacting said acidified silica nanoparticles with an organic sulfonate silane, preferably an organic sulfonate alkoxy silane.

Item 5 is the method according to any of the preceding items, wherein the surface of the acidified silica nanoparticles is functionalized with organic sulfonate functional groups by addition of an organic sulfonate silane, preferably an organic sulfonate alkoxy silane, to the coating composition comprising acidified silica nanoparticles.

Item 6 is the method according to any of the preceding items, wherein the method comprises the steps of:
a) providing a coating composition comprising:
   i. an aqueous continuous liquid phase;
   ii. acidified silica nanoparticles dispersed in the aqueous continuous liquid phase;
   iii. an organic sulfonate silane, which is preferably an organic sulfonate alkoxy silane;
   iv. optionally, an hydrophilic polymer; and
b) optionally, allowing the acidified silica nanoparticles to (chemically) react with the organic sulfonate silane;
c) contacting the substrate with the coating composition;
d) allowing the coating composition to dry so as to provide a (sintered) silica nanoparticle coating onto the substrate.

Item 7 is the method of item 6, wherein the coating composition comprises:
a) an aqueous continuous liquid phase;
b) silica nanoparticles dispersed in the aqueous continuous liquid phase;
c) an organic sulfonate silane, preferably organic sulfonate alkoxy silane;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, an hydrophilic polymer.

Item 8 is the method of any of item 6 or 7, wherein the coating composition comprises:
a) from 0.5 to 99 wt.% of water;
b) from 0.1 to 20 wt.%, preferably from 1 and 15 wt.%, more preferably from 2 to 10 wt.%, even more preferably from 3 to 8 wt.%, still more preferably from 4 to 6wt.% of silica nanoparticles;
c) from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an organic sulfonate silane;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an hydrophilic polymer.

Item 9 is the method according to any of the preceding items, wherein the ratio of organic sulfonate silanes to silica nanoparticles is below 20:80, preferably below 10:90, more preferably the weight ratio of organic sulfonate silanes to silica nanoparticles is comprised between 3:97 and 8:92, more preferably between 4:96 and 6:94; even more preferably the weight ratio of organic sulfonate silanes to silica nanoparticles is of about 5:95.

Item 10 is a method for the prevention and/or removal of limescale and/or soap scum from the surface of a substrate, wherein the method comprises the steps of:
a) contacting said substrate with a coating composition comprising acidified silica nanoparticles and a sulfonated polymer; and
b) allowing said coating composition to dry so as to provide a (sintered) silica nanoparticle coating onto said substrate.

Item 11 is the method of item 10, wherein the sulfonated polymer is selected from the group consisting of functional sulfonated polymers, reactive functional sulfonated polymers, polar sulfonated polymer, and any combinations of mixtures thereof. Preferably, the sulfonated polymer is selected from the group consisting of (meth)acrylic acid-based sulfonate polymers, carboxylic acid-based sulfonate copolymers, and any combinations or mixtures thereof.

Item 12 is the method according to any of the preceding items, wherein the coating composition comprises an aqueous dispersion of silica nanoparticles, having a pH of less than 5, preferably less than 4, more preferably less than 3.

Item 13 is the method of item 12, wherein the coating composition comprises an acid having preferably a pKa of less than 5, more preferably less than 3, even more preferably less than 2, still more preferably less than 0, in an amount sufficient to maintain the pH of said coating composition preferably below 5, more preferably below 4, even more preferably below 3.

Item 14 is the method according to any of the preceding items, wherein the coating composition further comprises an hydrophilic polymer.

Item 15 is the method of item 14, wherein the hydrophilic polymer is selected from the group consisting of acrylic-based polymers and copolymers, amine-based polymers and copolymers, ether-based polymers and copolymers, styrene-based polymers and copolymers, vinyl acid-based polymers and copolymers, vinyl alcohol-based polymers and copolymers, and any combinations of mixtures thereof. Preferably, the hydrophilic polymer is selected from the group consisting of polyvinyl alcohol polymers, polyethylene glycol polymers, and any combinations or mixtures thereof.

Item 16 is the method according to any of the preceding items, wherein the concentration of the silica nanoparticles is comprised between 0.5 and 20 wt.%, preferably between 1 and 15 wt.%, more preferably between 2 and 10 wt.%, even more preferably between 3 and 8 wt.%, still more preferably between 4 and 6 wt.% in the coating composition; most preferably the concentration of the silica nanoparticles is of about 5 wt.% in the coating composition.

Item 17 is the method according to any of the preceding items, wherein the silica nanoparticles have an average particle diameter of 40 nanometers or less, preferably of 20 nanometers or less, more preferably of 10 nanometers or less, even more preferably of 6 nanometers or less.

Item 18 is the method according to any of the preceding items, which further comprises the steps of rinsing or wiping the coated substrate.

Item 19 is a coating composition suitable for the prevention and/or removal of limescale and/or soap scum from the surface of a substrate, comprising:
a) an aqueous continuous liquid phase;
b) acidified silica nanoparticles dispersed in said aqueous continuous liquid phase;
c) a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90; and
d) optionally, an hydrophilic polymer.

Item 20 is the coating composition of item 19, which comprises:
a) an aqueous continuous liquid phase;
b) silica nanoparticles dispersed in the aqueous continuous liquid phase;
c) a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, an hydrophilic polymer.

Item 21 is the coating composition of any of item 19 or 20, which comprises:
a) from 0.5 to 99 wt.% of water;
b) from 0.1 to 20 wt.%, preferably from 1 to 15 wt.%, more preferably from 2 to 10 wt.%, even more preferably from 3 to 8 wt.%, still more preferably from 4 to 6wt.% of silica nanoparticles;
c) from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an hydrophilic polymer.

Item 22 is the coating composition according to any of items 19 to 21, wherein the sulfonated polymer is selected from the group consisting of functional sulfonated polymers, reactive functional sulfonated polymers, polar sulfonated polymer, and any combinations of mixtures thereof. Preferably, the sulfonated polymer is selected from the group consisting of (meth)acrylic-acid based sulfonate polymers, carboxylic acid-based sulfonate copolymers, and any combinations or mixtures thereof.

Item 23 is the coating composition according to any of items 19 to 22, wherein the hydrophilic polymer is selected from the group consisting of acrylic-based polymers and copolymers, amine-based polymers and copolymers, ether-based polymers and copolymers, styrene-based polymers and copolymers, vinyl acid-based polymers and copolymers, vinyl alcohol-based polymers and copolymers, and any combinations of mixtures thereof. Preferably, the hydrophilic polymer is selected from the group consisting of polyvinyl alcohol polymers, polyethylene glycol polymers, and any combinations or mixtures thereof.

Item 24 is the coating composition according to any of items 19 to 23, wherein the coating composition comprises an aqueous dispersion of silica nanoparticles.

Item 25 is the coating composition according to any of items 19 to 24, wherein the silica nanoparticles have an average particle diameter of 40 nanometers or less, preferably of 20 nanometers or less, more preferably of 10 nanometers or less, even more preferably of 6 nanometers or less.

Item 26 is a coated article comprising a substrate and a coating composition according to any of items 19 to 25 thereon.

Item 27 is the coated article of item 26, which has a static water contact angle of less than 25o, preferably less than 20°, more preferably less than 15°, even more preferably less than 12°, still more preferably less than 10°, when measured according to the durability test method described in the experimental section.

Item 28 is the coated article of any of item 26 or 27, which has a static water contact angle of less than 25o, preferably less than 20°, more preferably less than 15°, even more preferably less than 10°, when measured according to the durability test method described in the experimental section, after the coated article has been subjected to 1000 wet abrasion cycles performed according to the wet abrasion procedure described in the experimental section.

Item 29 is the method according to any of items 1 to 18 or a coating composition according to any of items 19 to 25 or a coated article according to any of items 26 to 28, wherein the substrate is a hard surface preferably selected from the group consisting of siliceous substrates, glass surfaces, plastic surfaces, thermoset polymeric surfaces, thermoplastic polymeric surfaces, organic polymeric substrates, ceramic surfaces, cement surfaces, stone surfaces, painted or clearcoated surfaces, metal surfaces, and any combinations thereof.

Item 30 is the method or the coating composition or the coated article according to item 29, wherein the substrate is translucent or preferably transparent, and is preferably selected from the group consisting of glass surfaces, thermoplastic polymeric surfaces, organic polymeric substrates, ceramic surfaces, and any combinations thereof.

Item 31 is the method or the coating composition or the coated article according to any of item 29 or 30, wherein the substrate is selected from the group consisting of shower surrounds, shower cabins, bathtubs, toilets, sinks, faucets, windows, mirrors, and any combinations thereof.

Item 32 is the use of a coating composition according to any of items 19 to 25 for the prevention and/or removal of limescale and/or soap scum from the surface of a substrate, which is preferably selected from hard surfaces typically located in a bathroom, in a toilet or in a kitchen, more preferably in a bathroom.

### EXAMPLES

The following non-limiting examples are provided to further illustrate the compositions and methods provided herein. Unless specified otherwise, percentages are percentages by weight with respect to the total mass of the compositions and add up in each case to 100 weight percent.

### Test methods:

### Static Water Contact Angle Measurement [W.C.A.]

Static water contact angle measurements are performed on dried (treated) samples using deionized water, obtained from Millipore Corporation. The contact angle analyzer used is a video contact angle analyzer, available as VCA Optima (AST Products Inc.). The static contact angle are measured on a sessile drop (1 µL), 30 sec after deposition. The values reported are the average of at least 4 separate measurements.

### Transparency measurement

The samples are tested for light transmission (T) and haze (H) using a BYK Gardner Haze-Gard Plus instrument (BYK Gardner). The transmission, haze and clarity levels are collected according to ASTM-D 1003-00 titled 'Standard Test Method for Haze and Luminous Transmittance for Transparent Plastics'. The instrument is referenced against air during the measurements. Light transmission (T) measurements are provided as a percentage of transmission. Haze (H) is the scattering of light by a specimen responsible for the reduction in contrast of objects viewed through it. Haze is presented herein as the percentage of transmitted light that is scattered so that its direction deviates more than a specified angle of 2.5 degrees from the direction of the incident beam. The values recorded represent the percentage of relative change of transmission and haze when comparing stained coated test panels with stained untreated test panels.

### Soap scum preparation

Crushed Ivory^{™} soap (1.6 g) is added to hot tap water (192 g) and then the mixture is sonicated for 30 min at 60 °C. Subsequently, artificial sebum (1.2 g) is added and the mixture is sonicated for an additional 10 min. A second vessel is charged with hot tap water (600 g), Herbal Essence^{™} shampoo (1.6 g), and Herbal Essence^{™} conditioner (4.0 g), which is stirred for 15 sec. Oleic acid (1.6 g) is added to the shampoo solution and stirred an additional 15 sec. The contents of both solutions are combined and mixed for an additional 2 h.

### Soap scum removal Test

Test glass panels are vertically immersed into the freshly prepared soap scum solution. The panels are left in the soap scum solution for 1-2 mins. Subsequently, the panels are lifted out the solution and dried in the air for 5 minutes. The panels are eventually subjected to a rinsing step with a low-pressured water stream at a speed of 600mL/min. The surface of the panels are visually inspected so as to check the presence of any residue of soap scum remaining after rinsing. The coating cleanability with water is visually inspected and the % of soap scum remaining on the surface of the treated panels is recorded.

### Wet Abrasion Procedure

Wet abrasion tests are performed on a Reciprocating Abraser (Model 5900, available from TABER INDUSTRIES). Wet abrasions are conducted by employing a force of 14.5 N and a velocity of 75 cycles/min (1380 g weight) and employing deionized water. The cloth used for testing is 13.5 Crockmeter cloth (Crockmeter squares, 100 % cotton).

### Durability Test

Durability of the coating in aqueous environment is tested by immersing the treated panel in water of 45°C during 17 hours. After the panel is wiped dry with a KimWipe tissue (available from Kimberly-Clark) and cooled to room temperature, the static water contact angle and the transmission of the panel are measured, wherein the panel is optionally first subjected to wet abrasion prior to testing.

### Test panels:

Glass test panels are used. The tests are done on the side opposite to the tin-side of the glass.

### Treatment of the test panels

Nanosilica particle compositions (composition as given in the examples), are diluted with deionized water and acidified with nitric acid to a pH of 2-3. Aqueous solutions of the additives are prepared by dispersing (solid) additives in deionized water at a concentration of 10 wt%. The aqueous dispersion of the additive is then added to the silica nanoparticle dispersion in amounts as listed in the examples. Unless otherwise stated, all coating dispersions contain 5 wt% solids.

The test panels are divided into two sections, wherein one section remained untreated and the other section is treated with a composition according to the invention or with a comparative treating composition. This method provides a control on the same panel, since the spraying procedure for the generation of hard water stains as outlined below may give differences in the amount of stain produced from panel to panel.

The treatment of part of the test panels is done by putting a small amount (0.5-1 mL) of treatment dispersion onto the test panel, by means of a 1 mL pipette. The dispersion is allowed to spread and then the panel is wiped dry using a KimWipe tissue (available from Kimberly-Clark). The panel is then left at RT for at least 5 min. When properly applied, the treatment on the panels is not visible.

### Generation of hard water stains

Hard water stains are generated by spraying of any of the below mentioned solutions on the test panels, held in vertical position.

### Solution A:

Solution A contained 1% CaCl₂, 0.5% MgCl₂, 12 % EtOH and 86.5 % deionized water.

### Solution B:

Solution B contained 1.5 % NaHCO₃ and 98.5 % deionized water.

Solution A is first sprayed on the test panels 3 times, followed by spraying of solution B. Then the test panels are allowed to dry at room temperature for 5 min and the procedure is repeated twice. This is followed by rinsing the test samples under a tap with deionized water for 60 sec at a speed of 600mL/min. After rinsing, the test samples are allowed to dry at RT during 5 min.

### Materials used:

| **Abbreviation** | **Composition** | **Availability** |
|---|---|---|
| TEOS | Tetraethoxysilane, Si(OC₂H₅)₄ | ALDRICH |
| Acumer 2100 | Carboxylate/Sulfonate copolymer having average molecular weight of 11000. | Dow |
| Acumer 2000 | Carboxylate/Sulfonate copolymer having average molecular weight of 4500. | Dow |
| PVA | Polyvinyl alcohol, having Mn of 31000-50000. | ALDRICH |
| PEG | 2-methoxy(polyethyleneoxy)propylmethoxysilane, having average molecular weight of 460-550 g/mol. | ALDRICH |
| AA-AAPS | Polyacrylic acid-co-2-methyl-2[(1-oxo-2-propenyl)amino]-1-propanesulfonic acid sodium salt. | Alco Chemical Company |
| SO₃-silane | Synthesized by reaction between 3-(glycidoxypropyl)trimethoxysilane and sodiumsulfite in methanol, in a 1:1 molar ratio at a temperature of 50°C for 16 hours. | |
| Z-silane | Zwitterionic silane, synthesized by reaction between 3-(dimethylaminopropyl)trimethoxy silane and 1,4- butane sulfone, in a 1:1 molar ratio at a temperature of 50°C for 6 hours. | |

### Silica nanoparticles

SIL-1: NALCO 1115 (4 nm, sodium stabilized, 10 wt% in water), available from NALCO.
SIL-2: NALCO 2326 (5 nm, ammonium stabilized, 10 wt% in water), available from NALCO.
SIL-3: LEVASIL 500/15 (6 nm particles, 15 wt% in water), available from AKZO NOBEL.

### Examples:

### Examples 1 and 2 and comparative examples C-1 and C-2

In examples 1 and 2, glass test panels are treated according to the general procedure, with a 5 wt % aqueous dispersion of acidified SIL-3 containing different amounts of Z-silane, as given in table 1. Comparative example C-1 is made with a glass test panel treated with a 5 wt% aqueous dispersion of acidified SIL-3, whereas comparative example C-2 is made with a glass test panel treated with a 5 wt% aqueous dispersion of Z-silane. Hard water stains are generated according to the general procedure outlined above. The test panels are evaluated for their transparency. All test results are listed in Table 1.

**Table 1**

| Example | Treatment composition | T_{change} [%] | H_{change} [%] |
|---|---|---|---|
| Ex 1 | SIL-3/Z-silane (95/5) | +1.6 | -82 |
| Ex 2 | SIL-3/Z-silane (90/10) | +1.1 | -87 |
| C-1 | SIL-3 | +0.2 | -69 |
| C-2 | Z-silane | +0.9 | -81 |

### Example 3 and comparative example C-3

Example 3 and comparative example C-3 are made in the same manner, except using different silica nanoparticles and a different sulfonated silane as indicated in Table 2. The coating compositions had a total solids content of 5% by weight. Hard water stains are generated according to the general procedure outlined above. The test panels are evaluated for their transparency. The test results are listed in Table 2.

**Table 2 : Evaluation of silica nanoparticles with sulfonated silane.**

| Example | Treatment composition | T_{change} [%] | H_{change} [%] |
|---|---|---|---|
| Ex 3 | SIL-1/SO₃-silane (95/5) | +0.3 | -73 |
| C-3 | SIL-1 | +0.2 | -19 |

### Examples 4 and 5 and comparative examples C-4 and C-5

In example 4 and 5, glass test panels are treated according to the general procedure, with a 5 wt % aqueous dispersion of acidified SIL-2 compositions comprising a sulfonated silane, as given in Table 3. The soap scum removal peformance is evaluated and compared with a glass panel treated with the same composition as in example 5, but in basic pH conditions (C-4) and with an acidified composition of sulfonated silane with TEOS, but without silica nanoparticles (C-5). The soap scum removal data are recorded in Table 3.

**Table 3 : Soap scum removal performance of acidified nanosilica particles with sulfonated silane and TEOS.**

| Example | Treatment composition | pH | Soap scum removal |
|---|---|---|---|
| Ex 4 | [SIL-2/SO₃-silane (90/10)] / TEOS 90/10 | <7 | 2 % residue |
| Ex 5 | [SIL-2/SO₃-silane/PEG (80/10/10)] / TEOS 90/10 | <7 | 0-2 % residue |
| C-4 | [SIL-2/SO₃-silane (90/10)] / TEOS 90/10 | >7 | 5 % residue |
| C-5 | SO₃-silane / TEOS 90/10 | <7 | 5 % residue |

### Example 6 and comparative example C-6

In example 6 and comparative example C-6, glass test panels are treated according to the general procedure, with 5 wt % aqueous dispersions as listed in Table 4. Static water contact angles are measured after the dried substrates are cooled to room temperature and after wet durabilty test with and without wet abrasion. Hard water stains are generated according to the general procedure outlined above. The test panels are evaluated for their transparency. All test results are recorded in Table 4.

**Table 4**

| Test | Ex 7 | C-6 |
|---|---|---|
| | Acumer 2000/SIL-3 (95/5) | Acumer 2000 |
| Initial WCA | 6° | 7° |
| WCA (17 hrs/45°C water) | 10° | 13° |
| WCA (17 hrs/45°C water + wet abrasion 1000 cycles) | 13° | 22° |
| Transmission (T_{change} [%]) | +1.6 | +0.1 |
| Haze (H_{change} [%]) | -45 | -21 |

### Examples 7 to 13

In examples 7 to 13, glass test panels are treated according to the general procedure, with 5 wt % aqueous dispersions of acidified nanosilica nanoparticle compositions comprising sulfonated polymers, as given in Table 4. Hard water stains are generated according to the general procedure outlined above. The test panels are evaluated for their transparency. All test results are listed in Table 5.

**Table 5**

| Example | Treatment composition | T_{change} [%] | H_{change} [%] |
|---|---|---|---|
| Ex 7 | SIL-3/Acumer 2100 (95/5) | +0.6 | -88 |
| Ex 8 | SIL-1/Acumer 2100 (90/10) | +0.4 | -28 |
| Ex 9 | SIL-2/Acumer 2100 (90/10) | +0 | -32 |
| Ex 10 | SIL-2/Acumer 2100/PVA (90/5/5) | +0.4 | -95 |
| Ex 11 | SIL-1/AA-AAPS (90/10) | +0.3 | -84 |
| Ex 12 | SIL-2/AA-AAPS (90/10) | -0.1 | -32 |
| Ex 13 | SIL-2/AA-AAPS/PVA (90/5/5) | +0.7 | -85 |

## Claims

1. A method for the prevention and/or removal of limescale and/or soap scum from the surface of a substrate, wherein the method comprises the steps of:
a) contacting said substrate with a coating composition comprising acidified silica nanoparticles, wherein the surface of said acidified silica nanoparticles is functionalized with organic sulfonate functional groups; and
b) allowing said coating composition to dry so as to provide a silica nanoparticle coating onto said substrate.

2. A method according to claim 1, wherein the surface of the silica nanoparticles is functionalized with organic sulfonate functional groups through covalent bonds, preferably through covalent siloxane bonds, between the organic sulfonate functional groups and the surface of said silica nanoparticles.

3. A method according to any of the preceding claims, wherein the surface of the acidified silica nanoparticles is functionalized with organic sulfonate functional groups by (chemically) reacting said acidified silica nanoparticles with an organic sulfonate silane, preferably an organic sulfonate alkoxy silane.

4. A method according to any of the preceding claims, wherein the surface of the acidified silica nanoparticles is functionalized with organic sulfonate functional groups by addition of an organic sulfonate silane, preferably an organic sulfonate alkoxy silane, to the coating composition comprising acidified silica nanoparticles.

5. A method for the prevention and/or removal of limescale and/or soap scum from the surface of a substrate, wherein the method comprises the steps of:
a) contacting said substrate with a coating composition comprising acidified silica nanoparticles and a sulfonated polymer; and
b) allowing said coating composition to dry so as to provide a silica nanoparticle coating onto said substrate.

6. A method according to claim 5, wherein the sulfonated polymer is selected from the group consisting of functional sulfonated polymers, reactive functional sulfonated polymers, polar sulfonated polymer, and any combinations of mixtures thereof; preferably the sulfonated polymer is selected from the group consisting of (meth)acrylic acid-based sulfonate polymers, carboxylic acid-based sulfonate copolymers, and any combinations or mixtures thereof.

7. A method according to any of the preceding claims, wherein the coating composition comprises an aqueous dispersion of silica nanoparticles, having a pH of less than 5, preferably less than 4, more preferably less than 3.

8. A method according to claim 7, wherein the coating composition comprises an acid having preferably a pKa of less than 5, more preferably less than 3, even more preferably less than 2, still more preferably less than 0, in an amount sufficient to maintain the pH of said coating composition preferably below 5, more preferably below 4, even more preferably below 3.

9. A method according to any of the preceding claims, wherein the coating composition further comprises an hydrophilic polymer.

10. A method according to claim 9, wherein the hydrophilic polymer is selected from the group consisting of acrylic-based polymers and copolymers, amine-based polymers and copolymers, ether-based polymers and copolymers, styrene-based polymers and copolymers, vinyl acid-based polymers and copolymers, vinyl alcohol-based polymers and copolymers, and any combinations of mixtures thereof; preferably the hydrophilic polymer is selected from the group consisting of polyvinyl alcohol polymers, polyethylene glycol polymers, and any combinations or mixtures thereof.

11. A method according to any of the preceding claims, wherein the silica nanoparticles have an average particle diameter of 40 nanometers or less, preferably of 20 nanometers or less, more preferably of 10 nanometers or less, even more preferably of 6 nanometers or less.

12. A coating composition suitable for the prevention and/or removal of limescale and/or soap scum from the surface of a substrate, comprising:
a) an aqueous continuous liquid phase;
b) acidified silica nanoparticles dispersed in said aqueous continuous liquid phase;
c) a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90; and
d) optionally, an hydrophilic polymer.

13. A coating composition according to claim 12, comprising:
a) from 0.5 to 99 wt.% of water;
b) from 0.1 to 20 wt.%, preferably from 1 to 15 wt.%, more preferably from 2 to 10 wt.%, even more preferably from 3 to 8 wt.%, still more preferably from 4 to 6wt.% of silica nanoparticles;
c) from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of a sulfonated polymer, with the proviso that if the sulfonated polymer is polyacrylic acid-co-2-methyl-2[(1-oxo-2-propenyl)amino]-1-propanesulfonic acid sodium salt, then the weight ratio of the sulfonated polymer to the silica nanoparticles is different from 10:90;
d) an acid having preferably a pKa of less than 5, more preferably less than 3, even more preferably less than 2, still more preferably less than 0, in an amount sufficient to maintain the pH of said coating composition preferably below 5, preferably below 4, more preferably below 3; and
e) optionally, from 0.1 to 20 wt.%, preferably from 0.1 to 15 wt.%, more preferably from 0.15 to 10 wt.%, even more preferably from 0.20 to 5 wt.%, still more preferably from 0.25 to 1 wt.% of an hydrophilic polymer.

14. A coating composition according to any of claim 12 or 13, wherein the sulfonated polymer is selected from the group consisting of (meth)acrylic acid-based sulfonate polymers, carboxylic acid-based sulfonate copolymers, and any combinations or mixtures thereof.

15. A coating composition according to any of claims 12 to 14, wherein the hydrophilic polymer is selected from the group consisting of polyvinyl alcohol polymers, polyethylene glycol polymers, and any combinations or mixtures thereof.

16. A coating composition according to any of claims 12 to 15, wherein the silica nanoparticles have an average particle diameter of 40 nanometers or less, preferably of 20 nanometers or less, more preferably of 10 nanometers or less, even more preferably of 6 nanometers or less.

17. A coated article comprising a substrate and a coating composition according to any of claims 12 to 16 thereon.

18. A coated article according to claim 17, which has a static water contact angle of less than 25°, preferably less than 20°, more preferably less than 15°, even more preferably less than 12°, still more preferably less than 10°, when measured according to the durability test method described in the experimental section.

19. A coated article according to any of claim 17 or 18, which has a static water contact angle of less than 25°, preferably less than 20°, more preferably less than 15°, even more preferably less than 10°, when measured according to the durability test method described in the experimental section, after the coated article has been subjected to to 1000 wet abrasion cycles performed according to the wt abrasion procedure described in the experimental section.

20. A method according to any of claims 1 to 11 or a coating composition according to any of claims 12 to 16 or a coated article according to any of claims 17 to 19, wherein the substrate is a hard surface preferably selected from the group consisting of siliceous substrates, glass surfaces, plastic surfaces, thermoset polymeric surfaces, thermoplastic polymeric surfaces, organic polymeric substrates, ceramic surfaces, cement surfaces, stone surfaces, painted or clearcoated surfaces, metal surfaces, and any combinations thereof.

21. A method or a coating composition or a coated article according to claim 20, wherein the substrate is translucent or preferably transparent, and is preferably selected from the group consisting of glass surfaces, thermoplastic polymeric surfaces, organic polymeric substrates, ceramic surfaces, and any combinations thereof.

22. A method or a coating composition or a coated article according to claim 20 or 21, wherein the substrate is selected from the group consisting of shower surrounds, shower cabins, bathtubs, toilets, sinks, faucets, windows, mirrors, and any combinations thereof.

23. Use of a coating composition according to any of claims 12 to 16 for the prevention and/or removal of limescale and/or soap scum from the surface of a substrate, which is preferably selected from hard surfaces typically located in a bathroom, in a toilet or in a kitchen, more preferably in a bathroom.
